# EUROPEAN PATENT APPLICATION

(11) **EP 3 078 833 A1**
(43) Date of publication of application: **12.10.2016**
(21) Application number: 16159551.7
(22) Date of filing: 10.03.2016
(51) Int. Cl.: F02B 37/18, F02D 41/10, F02B 39/16, F02D 41/00, F02B 37/013

(54) **CONTROL APPARATUS FOR INTERNAL COMBUSTION ENGINE WITH SUPERCHARGER AND METHOD FOR CONTROLLING THE INTERNAL COMBUSTION ENGINE**

(30) Priority: 10.04.2015 JP 2015081130
(71) Applicant: Bosch Corporation, Tokyo 150-8360 (JP)
(72) Inventor: GOTO, Junji, Saitama, 3558603 (JP)
(74) Representative: Isarpatent

(57) **Abstract**

To provide a control apparatus for an internal combustion engine with a supercharger capable of reducing the exhaust pressure of an exhaust path to a predetermined upper limit or less without loss of the responsivity and traceability of the supercharging pressure control system controlling the supercharging pressure in the internal combustion engine with a supercharger. The control apparatus includes a supercharging pressure control unit (110) controlling the supercharging pressure for supercharging an engine (2) with air by changing, within a predetermined opening range, the opening degrees of exhaust flow rate regulating valves (321a, 321b, and 322a) adjusting the flow rate of exhaust gas flowing through the exhaust path of the engine (2), an engine speed determination unit (120) determining whether an engine speed increasing rate at which the engine speed of the engine (2) increases is less than a threshold, and a closing direction limit value changing unit (160) causing the supercharging pressure control unit (110) to control the supercharging pressure by changing a closing direction limit value within the predetermined opening range in an opening direction when the engine speed increasing rate is not less than the threshold.

## Description

### Technical Field

The present invention relates to a control apparatus for an internal combustion engine with a supercharger installed in a vehicle or the like and a method for controlling the internal combustion engine.

### Background Art

A turbocharger type supercharger is widely used to improve the heat efficiency of an internal combustion engine. Such a turbocharger type supercharger has a wastegate valve for bypassing exhaust gas flowing through a turbine, a variable nozzle turbo valve for changing the exhaust gas passing area of the turbine, and the like, which are provided to control the supercharging pressure in an exhaust path, so as to change the workload of the turbine depending on the opening degrees of these valves.

For example, PTL 1 discloses a supercharging system for an internal combustion engine that has a bypass passage bypassing the turbine, the bypass passage being formed by the first bypass passage having a small-diameter wastegate valve and the second bypass passage having a large-diameter wastegate valve to accurately control the flow rate of exhaust gas flowing through the turbine.

### Citation List

### Patent Literature

[PTL 1] JP-A-2007-138845

### Summary of Invention

### Technical Problem

In the supercharging system described in PTL 1 above and the like, the supercharging pressure is controlled by changing the opening degree of an exhaust flow rate regulating valve such as the above wastegate valve. For example, to make the responsivity of the supercharging pressure during transient operation such as acceleration higher than the responsivity during steady-state operation, it is desirable to restrict the exhaust flow rate, increase the exhaust pressure, and apply high loads to the turbine by changing the opening degree of the exhaust flow rate regulating valve such as the above wastegate valve to the closing side as much as possible. However, the exhaust pressure may exceed the upper limit allowed for the hardware. In contrast, the opening degree of the exhaust flow rate regulating valve is set to a position closer to the opening side than the limit value in the closing direction to prevent the exhaust pressure from exceeding the upper limit allowed for the hardware, the responsivity of the supercharging pressure degrades or the supercharging pressure achieved during steady-state operation reduces, thereby degrading the responsivity (drivability) and engine performance.

The invention addresses the above problems with an object of providing a control apparatus for an internal combustion engine with a supercharger that can reduce the exhaust pressure of exhaust path to the upper limit or less without loss of the responsivity and traceability of a supercharging pressure control system controlling the supercharging pressure in the internal combustion engine with a supercharger and a method for controlling the internal combustion engine.

### Solution to Problem

The invention has the following means to solve the above problems.

According to a first aspect of the invention, there is provided a control apparatus for an internal combustion engine with a supercharger for driving a turbine using exhaust gas flowing through an exhaust path of the internal combustion engine and supercharging the internal combustion engine with air flowing through an intake path using a compressor coupled to the turbine, the control apparatus characterized by including a supercharging pressure control unit controlling a supercharging pressure for supercharging the internal combustion engine with air by changing, within a predetermined opening range, an opening degree of an exhaust flow rate regulating valve adjusting a flow rate of the exhaust gas flowing through the exhaust path, an engine speed determination unit determining whether an engine speed increasing rate at which an engine speed of the internal combustion engine increases is less than a threshold, and a closing direction limit value changing unit causing the supercharging pressure control unit to control the supercharging pressure by changing a closing direction limit value within the predetermined opening range in an opening direction when the engine speed increasing rate is not less than the threshold.

In the first aspect, the closing direction limit value is the limit value of an opening degree at which the exhaust flow rate regulating valve can be closed. In the first aspect, when the engine speed increasing rate is not less than the threshold, the closing direction limit value in a predetermined opening range is changed in the opening direction since the exhaust pressure may exceed a predetermined allowable value. That is, only when the exhaust pressure can exceed the predetermined allowable value, the closing direction limit value of the exhaust flow rate regulating valve is changed in the opening direction to suppress an increase in the exhaust pressure.

As described above, only in a predetermined condition, the closing direction limit value of the exhaust flow rate regulating valve is changed in the opening direction to control the supercharging pressure, so that the exhaust pressure of the exhaust path can be reduced to the predetermined upper limit or less without loss of the responsivity and traceability of the supercharging pressure control system controlling the supercharging pressure.

According to a second aspect of the invention, there is provided a control apparatus for an internal combustion engine with a supercharger for driving a turbine using exhaust gas flowing through an exhaust path of the internal combustion engine and supercharging the internal combustion engine with air flowing through an intake path using a compressor coupled to the turbine, the control apparatus characterized by including a supercharging pressure control unit controlling a supercharging pressure for supercharging the internal combustion engine with air by changing, within a predetermined opening range, an opening degree of an exhaust flow rate regulating valve adjusting a flow rate of the exhaust gas flowing through the exhaust path, a fuel injection amount determination unit determining whether an injection amount increasing rate at which a fuel injection amount increases is less than a threshold, and a closing direction limit value changing unit causing the supercharging pressure control unit to control the supercharging pressure by changing a closing direction limit value within the predetermined opening range in an opening direction when the injection amount increasing rate is not less than the threshold.

In the second aspect, when the injection amount increasing rate is not less than the threshold, the closing direction limit value in the predetermined opening range is changed in the opening direction to control the supercharging pressure since the exhaust pressure may exceed the predetermined allowable value, so that the exhaust pressure of the exhaust path can be reduced to the predetermined upper limit or less without loss of the responsivity or traceability of the supercharging pressure control system controlling the supercharging pressure.

According to a third aspect of the invention, there is provided a control apparatus for an internal combustion engine with a supercharger for driving a turbine using exhaust gas flowing through an exhaust path of the internal combustion engine and supercharging the internal combustion engine with air flowing through an intake path using a compressor coupled to the turbine, the control apparatus characterized by including a supercharging pressure control unit controlling a supercharging pressure for supercharging the internal combustion engine with air by changing, within a predetermined opening range, an opening degree of an exhaust flow rate regulating valve adjusting a flow rate of the exhaust gas flowing through the exhaust path, a supercharging pressure determination unit determining whether a supercharging pressure increasing rate at which the supercharging pressure increases is less than a threshold, and a closing direction limit value changing unit causing the supercharging pressure control unit to control the supercharging pressure by changing a closing direction limit value within the predetermined opening range in an opening direction when the supercharging pressure increasing rate is not less than the threshold.

In the third aspect, when supercharging pressure increasing rate is not less than the threshold, the closing direction limit value in the predetermined opening range is changed in the opening direction to control the supercharging pressure since the exhaust pressure may exceed the predetermined allowable value, so that the exhaust pressure of the exhaust path can be reduced to the predetermined upper limit or less without loss of the responsivity and traceability of the supercharging pressure control system controlling the supercharging pressure.

Preferably, in the first to third aspects of the invention, the control apparatus for an internal combustion engine further includes an exhaust pressure determination unit determining whether an exhaust pressure upstream of the turbine has exceeded a predetermined value, in which the closing direction limit value changing unit causes the supercharging pressure control unit to control the supercharging pressure by changing the closing direction limit value within the predetermined opening range in the opening direction only when the exhaust pressure upstream of the turbine has exceeded the predetermined value.

The invention described above can be also interpreted as a method for controlling the internal combustion engine with a supercharger.

### Advantageous Effects of Invention

According to the invention, the exhaust pressure of an exhaust path can be reduced to a predetermined upper limit or less without loss of the responsivity and traceability of the supercharging pressure control system controlling the supercharging pressure in an internal combustion engine with a supercharger.

### Brief Description of Drawings

[Fig. 1] Fig. 1 illustrates the entire structure of an engine control system incorporating a control apparatus for an internal combustion engine with a supercharger according to the invention.
[Fig. 2] Fig. 2 illustrates a processing unit included in an engine control unit.
[Fig. 3] Fig. 3 is a flowchart illustrating a processing flow executed by the engine control unit.
[Fig. 4] Fig. 4 illustrates various types of time responses when a supercharging pressure control unit 110 controls the supercharging pressure in a state in which the closing direction limit value of a valve opening degree is fixed to a first closing direction limit value.
[Fig. 5] Fig. 5 illustrates various types of time responses when the supercharging pressure control unit 110 controls the supercharging pressure in a state in which the closing direction limit value of a valve opening degree is fixed to a second closing direction limit value.
[Fig. 6] Fig. 6 illustrates various types of time responses when the supercharging pressure control unit 110 controls the supercharging pressure in a state in which the closing direction limit value of a valve opening degree is changed by a closing direction limit value changing unit 160.

### Description of Embodiments

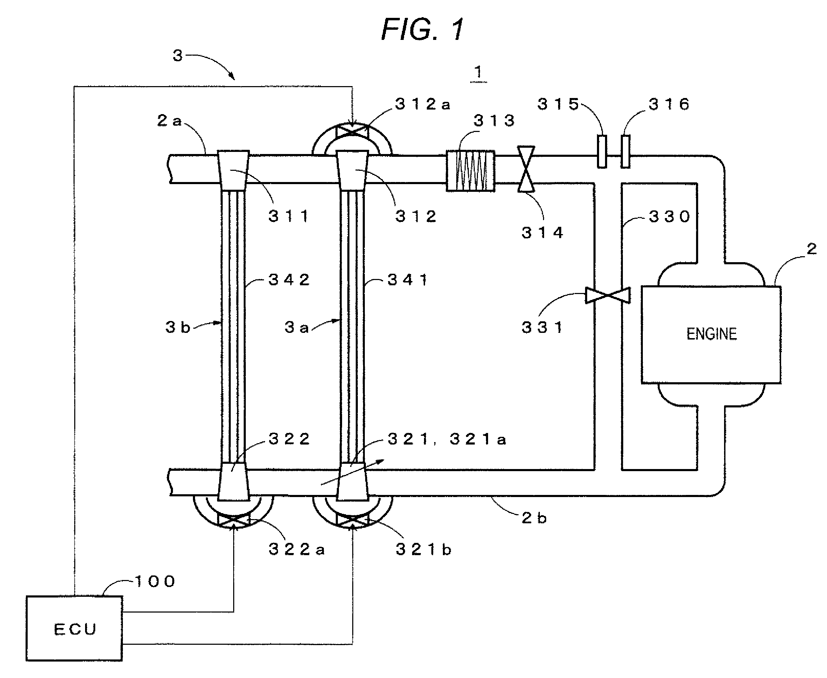

An embodiment of the invention (referred to below as the embodiment) will be described using specific examples. The embodiment relates to a control apparatus for an internal combustion engine with a supercharger to be installed in a vehicle or the like. Specifically, this control apparatus is incorporated in, for example, an engine control system 1 as shown in Fig. 1. Referring to Fig. 1, the structure and operation of the engine control system 1 will be described below focusing on supercharging pressure control for controlling the supercharging pressure of air to be supercharged to the engine.

### 1. Engine control system

The engine control system 1 includes an engine 2, a turbocharger 3, and an engine control unit 100 (referred to below as the ECU 100) as illustrated in Fig. 1.

The engine 2 is an internal combustion engine according to the invention and the engine 2 is a reciprocating engine such as, for example, a diesel engine using diesel fuel as the power source or a gasoline engine using gasoline fuel as the power source. Specifically, the engine 2 generates power by inhaling outside air (air) from an intake pipe 2a, which is an intake path connected to an outside air entrance, and burning fuel. Then, the engine 2 exhausts exhaust gas generated by combustion to an exhaust pipe 2b, which is an exhaust path. In the following description, the engine 2 is assumed to be a diesel engine.

The turbocharger 3 is a supercharger supercharging the engine 2 with air and is a two-stage turbocharger in which, for example, a high pressure stage turbocharger 3a and a low pressure stage turbocharger 3b as illustrated in Fig. 1 are connected to each other in series. Specifically, the turbocharger 3 includes, from upstream to downstream (close to the engine 2) of the intake pipe 2a, a low pressure stage compressor 311, a high pressure stage compressor 312, an intercooler 313, a throttle valve 314, a supercharging pressure sensor 315, and a temperature sensor 316. In addition, the turbocharger 3 includes, from upstream (close to the engine 2) to downstream of the exhaust pipe 2b, a high pressure stage turbine 321 and a low pressure stage turbine 322.

In addition, the engine control system 1 is provided with an exhaust gas recirculation (EGR) path 330 for reducing NOx or the like in exhaust gas. Specifically, the exhaust gas recirculation (EGR) path 330 is a path through which exhaust gas is fed back from the exhaust opening of the engine 2 to the intake opening of the engine 2 and is provided with an EGR valve 331 for adjusting the amount of exhaust gas to be fed back.

The high pressure stage compressor 312 and the high pressure stage turbine 321 are mechanically coupled to each other via a bearing unit 341 supporting them on a single rotational axis and the high pressure stage compressor 312 and the high pressure stage turbine 321 constitute the high pressure stage turbocharger 3a that rotates the high pressure stage compressor 312 using the rotational energy of the high pressure stage turbine 321 and supercharges the engine 2 with air. Here, the high pressure stage compressor 312 is provided with a compressor bypass valve 312a adjusting the amount of air flowing through the bypass path of the compressor. In addition, the high pressure stage turbine 321 is provided with a variable nozzle turbo valve 321a for changing the exhaust gas passing area of the turbine and a high pressure stage wastegate valve 321b for adjusting the amount of air flowing through the bypass path of the turbine.

The low pressure stage compressor 311 and the low pressure stage turbine 322 are mechanically coupled to each other via a bearing unit 342 supporting them on a single rotational axis and the low pressure stage compressor 311 and the low pressure stage turbine 322 constitute the low pressure stage turbocharger 3b that rotates the low pressure stage compressor 311 using the rotational energy of the low pressure stage turbine 322 and supercharges the engine 2 with air. Here, the low pressure stage turbine 322 is provided with a low pressure stage wastegate valve 322a adjusting the amount of air flowing through the bypass path of the turbine.

The supercharging pressure sensor 315 is a pressure sensor provided in the intake path from the high pressure stage compressor 312 to the engine 2. The supercharging pressure sensor 315 detects the pressure (supercharging pressure) of air with which the engine 2 is supercharged and reports the detected supercharging pressure (actual supercharging pressure) to the ECU 100.

The temperature sensor 316 is a temperature sensor provided in the intake path from the high pressure stage compressor 312 to the engine 2. The temperature sensor 316 detects the temperature of air with which the engine 2 is supercharged and reports the detected temperature to the ECU 100.

The turbocharger 3 having the above structure can blow more air to the engine 2 since the high pressure stage turbocharger 3a and the low pressure stage turbocharger 3b individually perform work.

The ECU 100 is a microcomputer including an input-output apparatus, a calculation apparatus performing various types of calculation, a main memory temporarily storing calculation data, and a storing unit storing calculation programs. The ECU 100 achieves the following processing by installing a control program controlling the engine control system 1 in the storing unit. That is, the ECU 100 controls the operation of the engine 2 and the turbocharger 3 by adjusting the amount of fuel injection for the engine 2 and the opening degrees of various types of valves and throttles included in the turbocharger 3 based on operation information by the driver such as the accelerator pedal position or detected information from various types of sensors. That is, the control apparatus for an internal combustion engine with a supercharger according to the invention is achieved as one function of the ECU 100.

The ECU 100 is not limited to the microprocessor described above and may be special hardware designed for controlling the engine control system 1 such as, for example, a programmable logic device.

### 2. Control apparatus for the internal combustion engine with a supercharger

### (Entire structure)

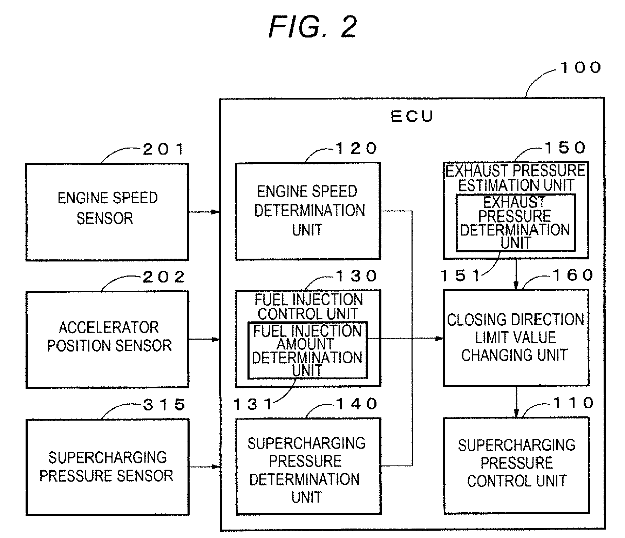

Next, the internal structure of the ECU 100 will be described with reference to Fig. 2.

The EUC100 includes the supercharging pressure control unit 110 controlling the supercharging pressure for supercharging the engine 2 with air, an engine speed determination unit 120 determining variations in the engine speed of the engine 2, a fuel injection control unit 130 controlling the amount of fuel injected to the engine 2 and the timing at which fuel is injected to the engine 2, a supercharging pressure determination unit 140 determining variations in the supercharging pressure, an exhaust pressure estimation unit 150 estimating the exhaust pressure, and the closing direction limit value changing unit 160 changing the closing direction limit value of the opening degree of the exhaust flow rate regulating valve, which will be described later.

The supercharging pressure control unit 110 controls the supercharging pressure for supercharging the engine with air so as to have a target supercharging pressure by changing, within a predetermined opening range, the opening degree of the exhaust flow rate regulating valve adjusting the flow rate of exhaust gas flowing though the exhaust path. Here, the exhaust flow rate regulating valve indicates the variable nozzle turbo valve 321a, the high pressure side wastegate valve 321b, and the low pressure side wastegate valve322a in the turbocharger 3 described above.

Specifically, the supercharging pressure control unit 110 sets the target value (target supercharging pressure ) of the supercharging pressure based on accelerator pedal position information from an accelerator position sensor 202, the amount of fuel injected by the fuel injection control unit 130, the engine speed from an engine speed sensor 201, and the like. Then, the supercharging pressure control unit 110 controls the supercharging pressure by adjusting the opening degree of the exhaust flow rate regulating valve based on physical expressions such as a valve restriction expression and a conversion efficiency expression for the turbine and compressor so that the difference between the actual supercharging pressure and the target supercharging pressure converges to zero.

Of the above three exhaust flow rate regulating valves, the supercharging pressure control unit 110 fully opens or fully closes the opening degrees of two of the exhaust flow rate regulating valves depending on three load areas separated by the load (speed) of the engine 2 and changes the opening of the remaining exhaust flow rate regulating valve (referred to below as the target opening degree variable valve).

First, in the low load area in which the amount of exhaust gas is small, the supercharging pressure control unit 110 controls the supercharging pressure by changing the opening degree of the variable nozzle turbo valve 321a as the target opening degree variable valve in the state in which the high pressure stage wastegate valve 321b and the low pressure stage wastegate valve322a are fully closed. Next, in the middle load area in which the engine speed of the engine 2 increases and the amount of exhaust gas is larger than in the low load area, the supercharging pressure control unit 110 controls the supercharging pressure by changing the opening degree of the high pressure stage wastegate valve 321b as the target opening degree variable valve in the state in which the variable nozzle turbo valve 321a is fully opened and the low pressure stage wastegate valve 322a is fully closed. In addition, in the high load area in which the engine speed of the engine 2 increases and the amount of exhaust gas is larger than in the middle load area, the supercharging pressure control unit 110 controls the supercharging pressure by changing the opening degree of the low pressure stage wastegate valve 322a as the target opening degree variable valve in the state in which the variable nozzle turbo valve 321a and high-pressure side wastegate valve are fully opened.

In addition, to prevent the exhaust pressure from exceeding the upper limit allowed for the hardware, the closing direction limit value changing unit 160, which will be described later, sets the closing direction limit value (that is, the limit value on the closing side) for the opening degree of the exhaust flow rate regulating valve (target opening degree variable valve). That is, the supercharging pressure control unit 110 controls the supercharging pressure by changing the opening degree of the exhaust flow rate regulating valve within a predetermined opening range.

The engine speed determination unit 120 calculates the engine speed increasing rate [rpm/sec] at which the engine speed increases per unit time (for example, 1 second) using the detection results from the engine speed sensor 201 and determines whether the calculated engine speed increasing rate is less than a threshold. The determination results are reported to the closing direction limit value changing unit 160.

The fuel injection control unit 130 controls the amount of fuel injected to the engine 2 and the timing at which fuel is injected to the engine 2 based on information such as the accelerator pedal position detected from the accelerator position sensor 202 and the engine speed detected from the engine speed sensor 201.

In addition, the fuel injection control unit 130 has a fuel injection amount determination unit 131 determining variations in the fuel injection amount. Specifically, the fuel injection amount determination unit 131
calculates the injection amount increasing rate [mg/st/sec] at which the fuel injection amount increases per unit time (1 second) and determines whether the calculated injection amount increasing rate is less than a threshold. The determination results are reported to the closing direction limit value changing unit 160.

The supercharging pressure determination unit 140 calculates the supercharging pressure increasing rate [hPa/sec] at which the actual supercharging pressure increases per unit time (for example, 1 second) using the detection results from the supercharging pressure sensor 315 and determines whether the calculated supercharging pressure increasing rate is equal to or more than the predetermined value. The determination results are reported to the closing direction limit value changing unit 160.

The exhaust pressure estimation unit 150 calculates the estimated value [hPa] (specifically, the estimated value of the exhaust pressure in the vicinity of the exhaust opening of the engine 2) of the exhaust pressure upstream of the high-pressure side turbine 321 based on the detection values of various types of sensors and the physical model of the engine control system 1 represented by physical expressions such as a valve restriction expression and a conversion efficiency expression for the turbine and the compressor. In addition, the exhaust pressure estimation unit 150 has an exhaust pressure determination unit 151 determining variations in the exhaust pressure. Specifically, the exhaust pressure determination unit 151 determines whether the estimated value of the exhaust pressure has exceeded a predetermined value lower than the allowable value defined by the hardware. For example, when the exhaust pressure has exceeded the predetermined value, it can be determined that the exhaust pressure is large enough to get close to the allowable value defined by the hardware. The determination results are reported to the closing direction limit value changing unit 160.

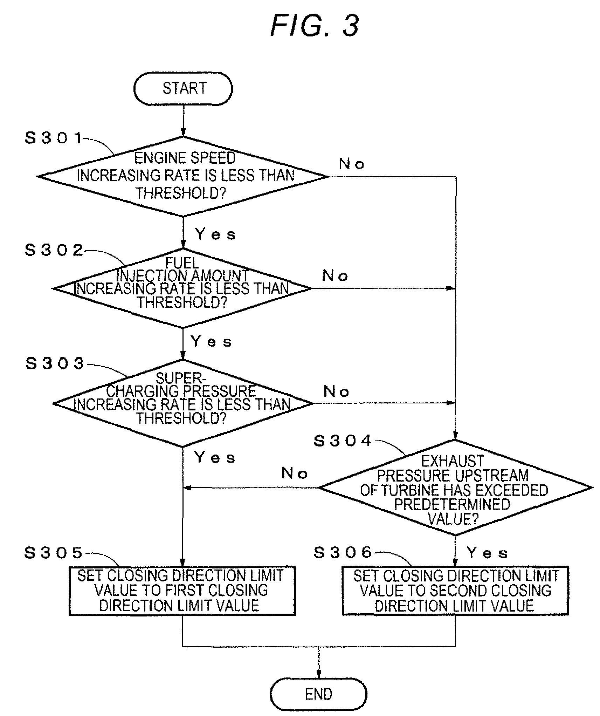

According to the determination results by the engine speed determination unit 120, the fuel injection amount determination unit 131, the supercharging pressure determination unit 140, and the exhaust pressure determination unit 151 (specifically, according to the processing illustrated in Fig. 3), the closing direction limit value changing unit 160 changes the closing direction limit value of the exhaust flow rate regulating valve that can be adjusted by the supercharging pressure control unit 110. Here, the closing direction limit value is the limit value of the opening degree to which the pressure control unit 110 can change the exhaust flow rate regulating valve to the closing side.

The ECU 100 having the above structure changes the closing direction limit value of the exhaust flow rate regulating valve according to, for example, the flowchart illustrated in Fig. 3.

In step S301, the engine speed determination unit 120 determines whether the engine speed increasing rate is less than a threshold. When the engine speed increasing rate is less than the threshold (Yes in S301), the processing proceeds to step S302. In contrast, when the engine speed increasing rate is not less than the threshold (No in S301) (that is, when the engine speed increasing rate is equal to or more than the threshold) , the processing proceeds to step S304.

In step S302, the fuel injection amount determination unit 131 determines whether the fuel injection amount increasing rate is less than a threshold. When the fuel injection amount increasing rate is less than the threshold (Yes in S302), the processing proceeds to step S303. In contrast, when the fuel injection amount increasing rate is not less than the threshold (No in S302) (that is, when the fuel injection amount increasing rate is equal to or more than the threshold), the processing proceeds to step S304.

In step S303, the supercharging pressure determination unit 140 determines whether the supercharging pressure increasing rate is less than a threshold. When the supercharging pressure increasing rate is less than the threshold (Yes in S303), the processing proceeds to step S305. In contrast, when the supercharging pressure increasing rate is not less than the threshold (No in S303) (that is, the supercharging pressure increasing rate is equal to or more than the threshold), the processing proceeds to step S304.

In step S304, the exhaust pressure determination unit 151 determines whether the estimated value of the exhaust pressure estimated by the exhaust pressure estimation unit 150 is more than a predetermined value. When the estimated value of the exhaust pressure is more than the predetermined value (Yes in S304), the processing proceeds to step S306. In contrast, when the estimated value of the exhaust pressure is not more than the predetermined value (No in S304) (that is, the estimated value of the exhaust pressure is equal to or less than the predetermined value (No in S304)), the processing proceeds to step S305.

In step S305, the closing direction limit value changing unit 160 sets the closing direction limit value of the valve opening degree to the first closing direction limit value and finishes the processing illustrated in Fig. 3. Here, the first closing direction limit value is the limit value on the valve closing side and closer to the closing side than a second closing direction limit value, which will be described later. That is, if the valve opening degree is set to the first closing direction limit value, the supercharging pressure control unit 110 can close the exhaust flow rate regulating valve so as to have a valve opening degree closer to the closing side than in the case in which the opening degree is set to the second closing direction limit value, which will be described later.

In step S306, the closing direction limit value changing unit 160 sets the closing direction limit value of the valve opening degree to the second closing direction limit value and finishes the processing illustrated in Fig. 3. The second closing direction limit value is the opening degree limit value on the valve closing side as described above and closer to the opening side than the first closing direction limit value. That is, if the valve opening degree is set to the second closing direction limit value, the supercharging pressure control unit 110 changes the opening degree of the exhaust flow rate regulating valve in the range limited to the opening side as compared with the case in which the closing direction limit value of the valve opening degree is set to the first closing direction limit value.

In the processing illustrated in Fig. 3 above, when one of the conditions of steps S301 to S303 is not met, since the pressure of the exhaust gas in the exhaust path may exceed a predetermined upper limit, the processing proceeds to step S304. In addition, when the exhaust pressure has exceeded the predetermined value in step S304, the processing proceeds to step S306 and the closing direction limit value changing unit 160 changes the closing direction limit value of the exhaust flow rate regulating valve from the first closing direction limit value to the second closing direction limit value. That is, in the processing illustrated in Fig. 3 above, only when the pressure of the exhaust gas in the exhaust path may exceed a predetermined upper limit, the closing direction limit value of the exhaust flow rate regulating valve is changed in the opening direction. The change from the first closing direction limit value to the second closing direction limit value may be step-like or may be gradual along the time axis.

If the closing direction limit value of the exhaust flow rate regulating valve is changed in the opening direction only in a predetermined condition to control the supercharging pressure, the exhaust pressure of the exhaust path can be reduced to a predetermined upper limit or less without loss of the responsivity and traceability of the supercharging pressure control system controlling the supercharging pressure as compared with the case in which, for example, the closing direction limit value of the valve opening degree is fixed.

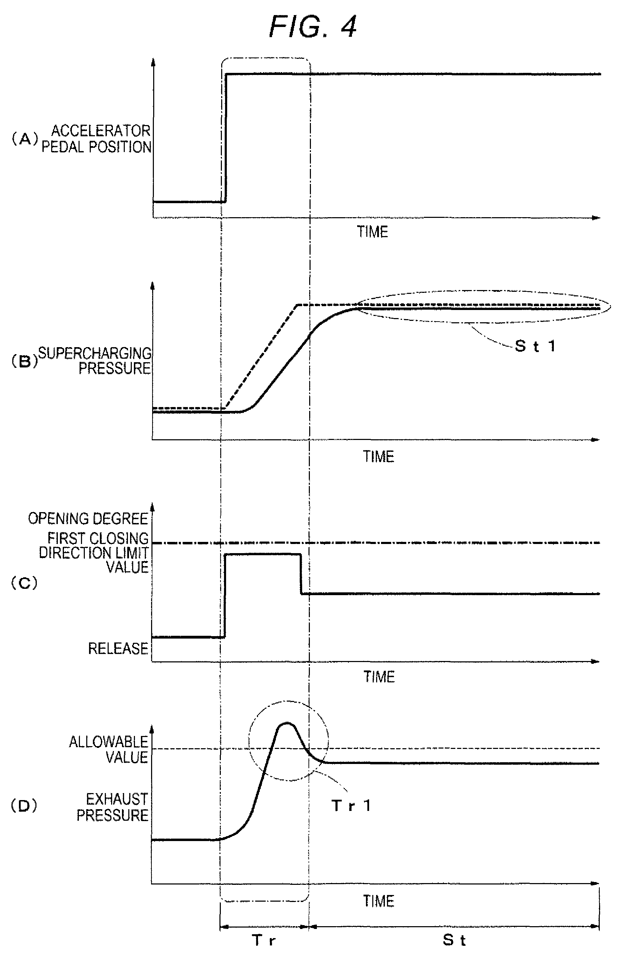

As the first comparison example, the following illustrates various types of time responses when the supercharging pressure is controlled by the supercharging pressure control unit 110 in the state in which the closing direction limit value of the valve opening degree is fixed to the first closing direction limit value, with reference to Fig. 4. Specifically, Fig. 4(A) illustrates the time response of the accelerator pedal position in which the accelerator opening degree (accelerator pedal position) is large on the upper side of the vertical axis. In addition, Fig. 4(B) illustrates the time responses of the target supercharging pressure (dashed line) and the actual supercharging pressure (solid line) in which the supercharging pressure is high on the upper side of the vertical axis. In addition, Fig. 4 (C) illustrates the time responses of the closing direction limit value (dot-dot-dash line) of the valve opening degree and the actual valve opening degree (solid line) in which the valve closing side is the upper side of the vertical axis. Fig. 4(D) illustrates the time response of the allowable value (dashed line) of the exhaust pressure upstream of the high pressure stage turbine 321 and the actual measurement value (solid line) in which the exhaust pressure is high on the upper side of the vertical axis.

As is apparent from Figs 4 (A) to 4(C), in the first comparison example, if the closing direction limit value of the valve opening degree is set to the first closing direction limit value, the supercharging pressure can be increased by quickly responding to a change in the accelerator pedal position in a transient state Tr. In addition, in a time period St1 in the steady-state St in Fig. 4(B), the actual supercharging pressure can follow the target supercharging pressure without steady-state deviation.

However, since the valve opening degree is adjusted to the relatively closing side in the first comparison example, the exhaust pressure increases in the time period Tr1 in the transient state Tr illustrated in Fig. 4(D) and undesirably exceeds the allowable value defined by the hardware.

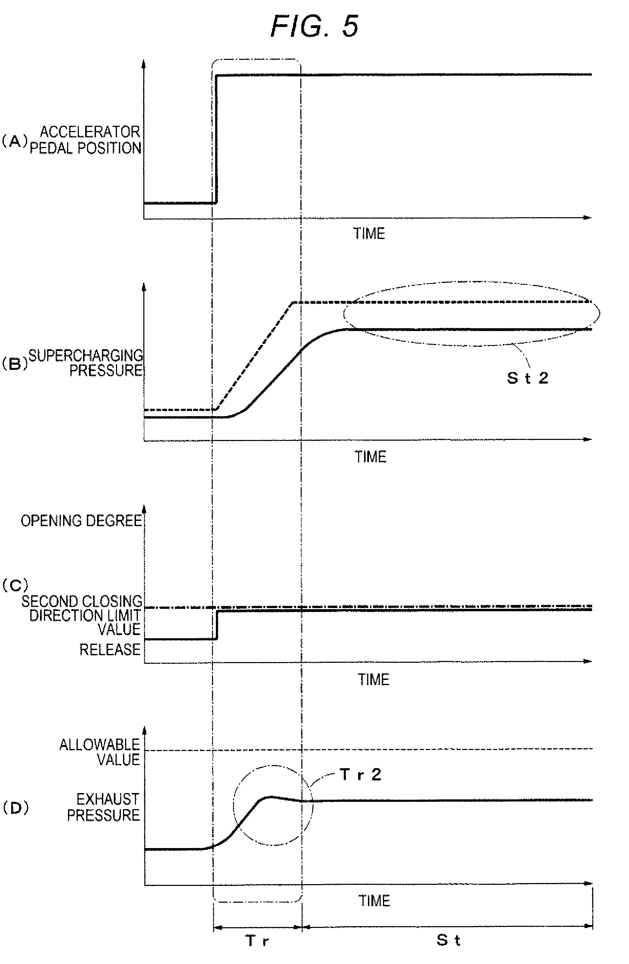

Next, as the second comparison example, the following illustrates various types of time responses when the supercharging pressure is controlled by the supercharging pressure control unit 110 in the state in which the closing direction limit value of the valve opening degree is fixed to the second closing direction limit value, with reference to Fig. 5. Specifically, Fig. 5(A) illustrates the accelerator pedal position, Fig. 5(B) illustrates the target supercharging pressure (dashed line) and the actual supercharging pressure (solid line), Fig. 5(C) illustrates the closing direction limit value (dot-dot-dash line) of the valve opening degree and the actual valve opening degree (solid line), and Fig. 5(D) illustrates the allowable value (dashed line) of the exhaust pressure upstream of the high pressure stage turbine 321 and the actual measurement value (solid line).

As is apparent from Figs. 5(A) to 5(C), since the closing direction limit value of the valve opening degree is fixed to the second closing direction limit value in the second comparison example, the response of the supercharging pressure to a change in the accelerator pedal position delays in the transient state Tr and the actual supercharging pressure cannot follow the target supercharging pressure in a time period St2 in the steady-state St, thereby causing steady-state deviation. However, since the valve opening degree is fixed to a relatively opening side in the transient state Tr in the second comparison example, an increase in the exhaust pressure can be suppressed and the allowable value defined by the hardware is not exceeded by the exhaust pressure in a time period Tr2 in the transient state Tr in Fig. 5(D).

As described above, in the first and the second comparison examples, it is not possible to reduce the exhaust pressure of the exhaust path to a predetermined upper limit or less without loss of the responsivity and traceability of the supercharging pressure control system controlling the supercharging pressure.

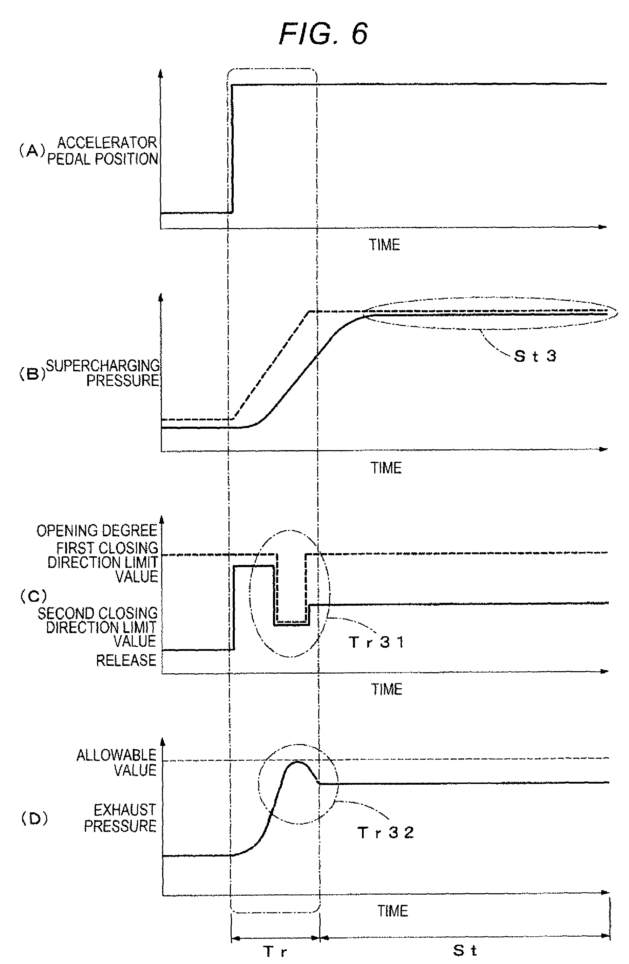

Next, the following illustrates time responses in the embodiment in which the closing direction limit value of the valve opening degree is made variable by the closing direction limit value changing unit 160 with the processing illustrated in Fig. 3, with reference to Fig. 6. Specifically, Fig. 6(A) illustrates the accelerator pedal position, Fig. 6(B) illustrates the target supercharging pressure (dashed line) and the actual supercharging pressure (solid line), Fig. 6(C) illustrates the closing direction limit value (dot-dot-dash line) of the valve opening degree and the actual valve opening degree (solid line), and Fig. 6 (D) illustrates the allowable value (dashed line) and the actual measurement value (solid line) of the exhaust pressure upstream of the high pressure stage turbine 321.

As is apparent from Figs. 6(A) to 6(C), according to the embodiment, in an early stage of the transient state Tr in which the supercharging pressure starts increasing, if the closing direction limit value of the valve opening degree is set to the first closing direction limit value, the actual supercharging pressure can be increased by quickly responding to a rise in the accelerator pedal position and the actual supercharging pressure can be quickly raised and increased so as to follow the target supercharging pressure. If the supercharging pressure is raised quickly as described above, even when the closing direction limit value of the valve opening degree is changed to the second closing direction limit value in a time period Tr31, the actual supercharging pressure can follow the target supercharging pressure without steady-state deviation in a time period St3 in the steady-state St. In addition, if the closing direction limit value of the valve opening degree is set to the second closing direction limit value in the time period Tr31, the exhaust pressure can peak in a time period Tr32 illustrated in Fig. 4D without exceeding the allowable value defined by the hardware.

As described above, if the ECU 100, which performs the processing illustrated in Fig. 3, changes the closing direction limit value of the exhaust flow rate regulating valve in the opening direction to control the supercharging pressure only in a predetermined condition such as the case in which the supercharging pressure increases quickly in the transient state Tr as illustrated in Fig. 6(A), the exhaust pressure of the exhaust path can be reduced to a predetermined upper limit or less without loss of the responsivity and traceability of the supercharging pressure control system controlling the supercharging pressure.

Of the processes illustrated in Fig. 3, the processing may directly proceed to step S306 from steps S301 to S303 by skipping step S304. That is, when the determination conditions of steps S301 to S303 are not met, since the exhaust pressure may exceed a predetermined allowable value, the closing direction limit value in the predetermined opening range may be changed in the opening direction to control the supercharging pressure. Particularly, by performing the determination process in step S304, the closing direction limit value is prevented from being unnecessarily changed to the opening side in the case in which the exhaust pressure does not exceed the allowable value under normal circumstances and degradation of the responsivity and traceability of the supercharging pressure control system is prevented.

### 3. Others

The actual supercharging pressure is not limited to a value obtained from the supercharging pressure sensor 315 described above and may be values obtained by estimation based on values from various types of sensors provided in the engine control system 1. In addition, the supercharger to which the invention is applied is not limited to the two-stage turbocharger 3 as described above and may be one supercharger.

In addition, the invention may be achieved by providing a non-temporarily recording medium, in which an engine control program realizing the functions of the above described embodiment are recorded, for an ECU and causing the calculation processing unit (CPU or MPU) of the ECU to read and execute the engine control program recorded in this recording medium.

In this case, the engine control program read from the non-temporarily recording medium achieves the function of the above embodiment. Accordingly, the engine control program and the non-temporarily recording medium in which this program is recorded are also aspects of the invention.

The non-temporarily recording medium for providing the engine control program may be, for example, a flexible disk, hard disk, magnetic optical disk, optical disk such as a CD-ROM, CD-R, CD-RW, DVD-ROM, DVD-RAM, DVD-RW, DVD+RW, magnetic tape, non-volatile memory card, and ROM. Alternatively, the program may be downloaded via a communication network.

1 Although the invention has been described above with reference to a typical embodiment, it will be appreciated that the invention is not limited to the typical aspects disclosed in this specification. The claims disclosed herein may be interpreted broadly so as to include all of such changes and equivalent structures and functions. Reference Signs List
- 2:: engine
- 321a:: variable nozzle turbo valve
- 321b:: high pressure stage wastegate valve
- 322a:: low pressure stage wastegate valve
- 110:: supercharging pressure control unit
- 120:: engine speed determination unit
- 131:: fuel injection amount determination unit
- 140:: supercharging pressure determination unit
- 151:: exhaust pressure determination unit
- 160:: closing direction limit value changing unit

## Claims

1. A control apparatus for an internal combustion engine with a supercharger for driving a turbine using exhaust gas flowing through an exhaust path of the internal combustion engine and supercharging the internal combustion engine with air flowing through an intake path using a compressor coupled to the turbine, the control apparatus **characterized by** comprising:
a supercharging pressure control unit controlling a supercharging pressure for supercharging the internal combustion engine with air by changing, within a predetermined opening range, an opening degree of an exhaust flow rate regulating valve adjusting a flow rate of the exhaust gas flowing through the exhaust path;
an engine speed determination unit determining whether an engine speed increasing rate at which an engine speed of the internal combustion engine increases is less than a threshold; and
a closing direction limit value changing unit causing the supercharging pressure control unit to control the supercharging pressure by changing a closing direction limit value within the predetermined opening range in an opening direction when the engine speed increasing rate is not less than the threshold.

2. A control apparatus for an internal combustion engine with a supercharger for driving a turbine using exhaust gas flowing through an exhaust path of the internal combustion engine and supercharging the internal combustion engine with air flowing through an intake path using a compressor coupled to the turbine, the control apparatus **characterized by** comprising:
a supercharging pressure control unit controlling a supercharging pressure for supercharging the internal combustion engine with air by changing, within a predetermined opening range, an opening degree of an exhaust flow rate regulating valve adjusting a flow rate of the exhaust gas flowing through the exhaust path;
a fuel injection amount determination unit determining whether an injection amount increasing rate at which a fuel injection amount increases is less than a threshold; and
a closing direction limit value changing unit causing the supercharging pressure control unit to control the supercharging pressure by changing a closing direction limit value within the predetermined opening range in an opening direction when the injection amount increasing rate is not less than the threshold.

3. A control apparatus for an internal combustion engine with a supercharger for driving a turbine using exhaust gas flowing through an exhaust path of the internal combustion engine and supercharging the internal combustion engine with air flowing through an intake path using a compressor coupled to the turbine, the control apparatus **characterized by** comprising:
a supercharging pressure control unit controlling a supercharging pressure for supercharging the internal combustion engine with air by changing, within a predetermined opening range, an opening degree of an exhaust flow rate regulating valve adjusting a flow rate of the exhaust gas flowing through the exhaust path;
a supercharging pressure determination unit determining whether a supercharging pressure increasing rate at which the supercharging pressure increases is less than a threshold; and
a closing direction limit value changing unit causing the supercharging pressure control unit to control the supercharging pressure by changing a closing direction limit value within the predetermined opening range in an opening direction when the supercharging pressure increasing rate is not less than the threshold.

4. The control apparatus for an internal combustion engine with a supercharger according to any one of claims 1 to 3, **characterized by** further comprising:
an exhaust pressure determination unit determining whether an exhaust pressure upstream of the turbine has exceeded a predetermined value,
wherein the closing direction limit value changing unit causes the supercharging pressure control unit to control the supercharging pressure by changing the closing direction limit value within the predetermined opening range in the opening direction only when the exhaust pressure upstream of the turbine has exceeded the predetermined value.

5. A method for controlling an internal combustion engine with a supercharger for driving a turbine using exhaust gas flowing through an exhaust path of the internal combustion engine and supercharging the internal combustion engine with air flowing through an intake path using a compressor coupled to the turbine, the method **characterized by** comprising the steps of:
controlling a supercharging pressure for supercharging the internal combustion engine with air by changing, within a predetermined opening range, an opening degree of an exhaust flow rate regulating valve adjusting a flow rate of the exhaust gas flowing through the exhaust path;
determining whether an engine speed increasing rate at which an engine speed of the internal combustion engine increases is less than a threshold; and
controlling the supercharging pressure by changing a closing direction limit value within the predetermined opening range in an opening direction when the engine speed increasing rate is not less than the threshold.

6. A method for controlling an internal combustion engine with a supercharger for driving a turbine using exhaust gas flowing through an exhaust path of the internal combustion engine and supercharging the internal combustion engine with air flowing through an intake path using a compressor coupled to the turbine, the method **characterized by** comprising the steps of:
controlling a supercharging pressure for supercharging the internal combustion engine with air by changing, within a predetermined opening range, an opening degree of an exhaust flow rate regulating valve adjusting a flow rate of the exhaust gas flowing through the exhaust path;
determining whether an injection amount increasing rate at which a fuel injection amount increases is less than a threshold; and
controlling the supercharging pressure by changing a closing direction limit value within the predetermined opening range in an opening direction when the injection amount increasing rate is not less than the threshold.

7. A method for controlling an internal combustion engine with a supercharger for driving a turbine using exhaust gas flowing through an exhaust path of the internal combustion engine and supercharging the internal combustion engine with air flowing through an intake path using a compressor coupled to the turbine, the method **characterized by** comprising the steps of:
controlling a supercharging pressure for supercharging the internal combustion engine with air by changing, within a predetermined opening range, an opening degree of an exhaust flow rate regulating valve adjusting a flow rate of the exhaust gas flowing through the exhaust path;
determining whether a supercharging pressure increasing rate at which the supercharging pressure increases is less than a threshold; and
controlling the supercharging pressure by changing a closing direction limit value within the predetermined opening range in an opening direction when the supercharging pressure increasing rate is not less than the threshold.

8. The method for controlling an internal combustion engine with a supercharger according to any one of claims 5 to 7, **characterized by** further comprising the step of:
determining whether an exhaust pressure upstream of the turbine has exceeded a predetermined value,
wherein, in the step of controlling the supercharging pressure by changing the closing direction limit value within the predetermined opening range in the opening direction, only when the exhaust pressure upstream of the turbine has exceeded the predetermined value, the closing direction limit value within the predetermined opening range is changed in the opening direction to cause the supercharging pressure control unit to control the supercharging pressure.
